**Europäisches Patentamt**

(19) **European Patent Office**

**Office européen des brevets**

(11) Publication number: **0 201 753**
**B1**

(12) **EUROPEAN PATENT SPECIFICATION**

(45) Date of publication of patent specification: **28.02.90**

(51) Int. Cl.⁵: **G 21 C 3/10**

(21) Application number: **86105354.4**

(22) Date of filing: **17.04.86**

(54) Apparatus for applying and end plug to an end of a nuclear fuel rod tube.

(30) Priority: **01.05.85 US 729398**
**03.05.85 US 730141**

(43) Date of publication of application:
**20.11.86 Bulletin 86/47**

(45) Publication of the grant of the patent:
**28.02.90 Bulletin 90/09**

(84) Designated Contracting States:
**BE DE FR GB IT SE**

(56) References cited:
**FR-A-1 509 994**
**FR-A-2 281 635**
**FR-A-2 331 126**
**GB-A-2 069 223**
**US-A-3 877 204**

(73) Proprietor: **WESTINGHOUSE ELECTRIC CORPORATION**
**Westinghouse Building Gateway Center**
**Pittsburgh Pennsylvania 15222 (US)**

(72) Inventor: **Rieben, Stuart Louis**
**1282 Pinewood Drive**
**Pittsburgh Pennsylvania 15243 (US)**
Inventor: **Wylie, Mark Elliott**
**622 Vallevista Avenue**
**Pittsburgh Pennsylvania 15234 (US)**
Inventor: **Klapper, Kenneth Kane**
**P.O. Box 2493**
**Columbia South Carolina 29202 (US)**
Inventor: **Boatwright, David Anthony**
**8201 Springflower Road**
**Solumbia Sourth Carolina 29223 (US)**

(74) Representative: **Patentanwälte Dipl.-Ing. R. Holzer Dipl.-Ing. (FH) W. Gallo**
**Ludwigstrasse 26**
**D-8900 Augsburg (DE)**

Courier Press, Leamington Spa, England.

## Description

The present invention relates generally to the manufacture of nuclear fuel rods and, more particularly, to an apparatus for applying an end plug to an end of a fuel rod tube.

Fuel rods for nuclear reactors commonly are thin walled tubes containing fissile material, usually in the form of cylindrical pellets of enriched uranium dioxide, which must be isolated from the environment surrounding the tubes when in use to prevent chemical reactions between the fuel and other materials, such as water in a pressurized water reactor. Thus, the cladding or thin walled tube containing the nuclear fuel ordinarily is hermetically sealed by means of end plugs.

It is critical that the end plugs themselves be impermeable and mechanically strong, and that the mechanical connection between each end plug and the thin walled tube is free of defects, such as discontinuities, cracks and tube distortions, which could eventually cause leaks.

The act of plugging a fuel rod tube is a critical operation since a heavy press fit must be used to contain the force of a plenum spring, such as usually employed in fuel rods, as the end plug is being fitted to the tube. Press fitting an end plug into a fuel rod tube conventionally involves guiding the plug from a position at the bottom of a stack of identical plugs within a storage and supply magazine into a guide bushing, and then forcing the plug into the adjacent tube end while at the same time compressing the plenum spring in the tube, which requires a pressing force of as much as 5,000 N.

Present methods of applying end plugs use closely fitting guide bushings to align the plugs with the tube, but the guide bushings ordinarily utilized must be somewhat larger than the maximum expected diametric size of the end plug in order to allow for manufacturing tolerances. Due to the necessary clearance between the plug and guide, end plugs sometimes cock, or tip, and such cocking results in a non-square press fit which can cause shearing at the tube/plug interface due to a shaving action occurring on the plug exterior as the plug is rammed home. Thereafter, when the connection is completed by welding the plug to the tube, the resultant weld commonly is faulty and includes discontinuities which cause leaks when in use. Moreover, improper seating of the end plug itself increases the likelihood of leakage, and it also is likely to result in pieces of the plug coming off occasionally as the plug is forced into the tube, which not only damages the end plug but also causes foreign matter to be deposited in the fuel rod.

It is the principal object of the invention to alleviate these problems, and the invention accordingly resides in an apparatus for applying an end plug to an end of a nuclear fuel rod tube as defined in claim 1.

Further appropriate and advantageous details and developments of the present invention are defined in the claims.

The present invention makes use of a feature which is known per se from FR—A—2 281 635. However, that document does not relate to an apparatus for applying an end plug to an end of a nuclear fuel rod tube but it relates to an apparatus for inserting fuel pellets into fuel rod tubes. This known apparatus includes also a guide means having therethrough a longitudinal bore with one end for receiving fuel pellets and with an opposite end for receiving the fuel rod tube into which the fuel pellets are to be inserted.

A preferred embodiment of the invention will now be described by way of example only, with reference to the accompanying dreawings, in which:

Fig. 1 is an elevational view, partly in section, of a fuel assembly illustrated in vertically foreshortened form and with parts broken away for clarity;

Fig. 2 is a top plan view of the end plug applying apparatus embodying the invention;

Fig. 3 is an enlarged end view of the apparatus as seen along line 3—3 of Fig. 2;

Fig. 4 is a sectional view of the apparatus taken along line 4—4 of Fig. 2;

Figs. 5 to 10 are schematic representations of the apparatus of Fig. 2, showing the relative positions of its components assumed in the sequence of successive steps performed in applying an end plug to a fuel rod tube;

Fig. 11 is an enlarged side elevational view of the plugging guide employed with the apparatus embodying the invention;

Fig. 12 is an end view of the plugging guide of Fig. 11; and

Fig. 13 is a sectional view of the plugging guide taken along line 13—13 of Fig. 12.

In the following description, like reference characters designate like or corresponding parts throughout the several views, and terms such as "forward", "rearward", "left", "right", "upwardly", "downwardly", and the like are employed as words of convenience not to be construed as limiting terms.

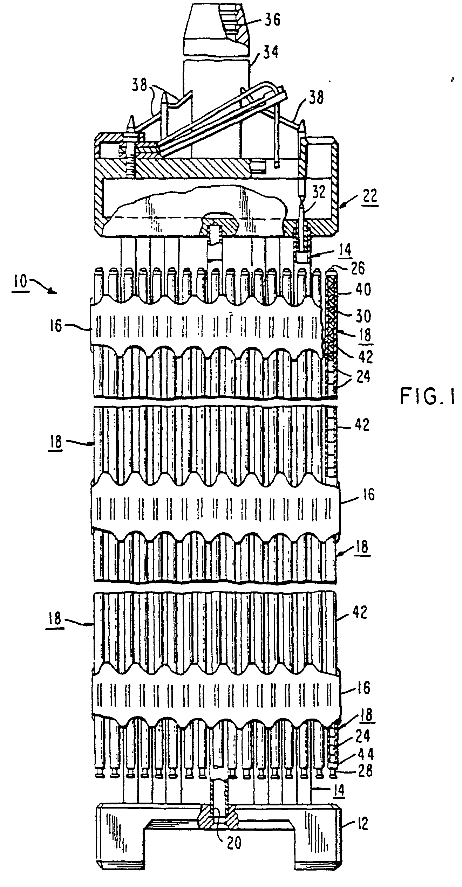

Referring first to Fig. 1, the fuel assembly illustrated therein and generally designated with reference numeral 10 is the type used in a pressurized water reactor (PWR) and basically comprises a lower end structure or bottom nozzle 12 for supporting the assembly on the lower core plate (not shown) in the core region of a reactor (not shown), a plurality of guide tubes or thimbles 14 projecting upward from the bottom nozzle 12, several transverse grids 16 spaced axially along the guide thimbles 14, an organized array of elongate fuel rods 18 transversely spaced and supported by the grids 16, an instrumentation tube 20, and an upper end structure or top nozzle 22 attached to the upper ends of the guide thimbles 14. With the parts thus arranged, the fuel assembly 10 forms an integral unit capable of being conventionally handled without damaging the assembly parts.

Each of the fuel rods 18 contains nuclear fuel pellets 24, and has its opposite ends closed by means of upper and lower end plugs 26, 28 so as to hermetically seal the rod. As is usual, a plenum spring 30 is disposed between the upper end plug 26 and the pellets 24 to maintain the pellets in a firmly stacked relationship within the rod 18. The fuel pellets 24, composed of fissile material, are the actual source of reactive power generated in the PWR, a liquid moderator/coolant such as water, or water containing boron, being pumped upwards through the fuel assemblies of the core in order to extract heat generated therein for the production of useful work.

To control the fission process, control rods 32 are reciprocally movable in the guide thimbles 14 disposed at predetermined locations in the fuel assembly 10. Specifically, the top nozzle 22 includes a rod cluster control mechanism 34 having an internally threaded cylindrical member 36 with radially extending flukes or arms 38, each of which is connected to a control rod 32. The control mechanism 34 is operable to move the control rods 32 vertically in the guide thimbles 14 in a manner such as to control the fission process in the fuel assembly 10, as well known in the art.

There will now be described the end plug applying apparatus embodying the invention. The apparatus will be described herein as utilized in applying upper end plugs 26 to the upper ends 40 of fuel rod tubes 42 but it should be understood that the description applies equally to the use of the apparatus in applying lower end plugs 28 to the lower ends 44 of fuel rod tubes 42.

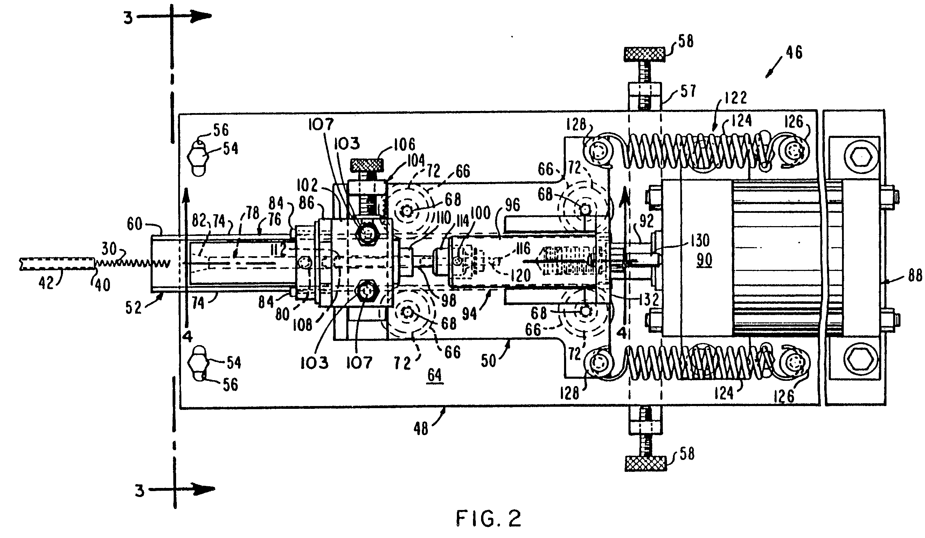

Referring now to Figs. 2 to 4, the end plug applying apparatus, generally designated with reference numeral 46, basically comprises a generally planar base 48, a generally planar support carriage 50, and a track assembly 52 movably mounting the support carriage on the base.

The base 48 is attached to a suitable stationary fixture (not shown) by means of bolts 54 which extend through elongate holes 56 in the front corners of the base, and a lateral adjustment mechanism 57 displaced rearwardly along the base from the front thereof and including threaded knobs 58. The latter and the elongate holes 56 permit the base 48 to be laterally adjusted, prior to being fixed in position on the stationary fixture, in order to assure proper alignment thereof with the fuel rod tubes 42 to be plugged.

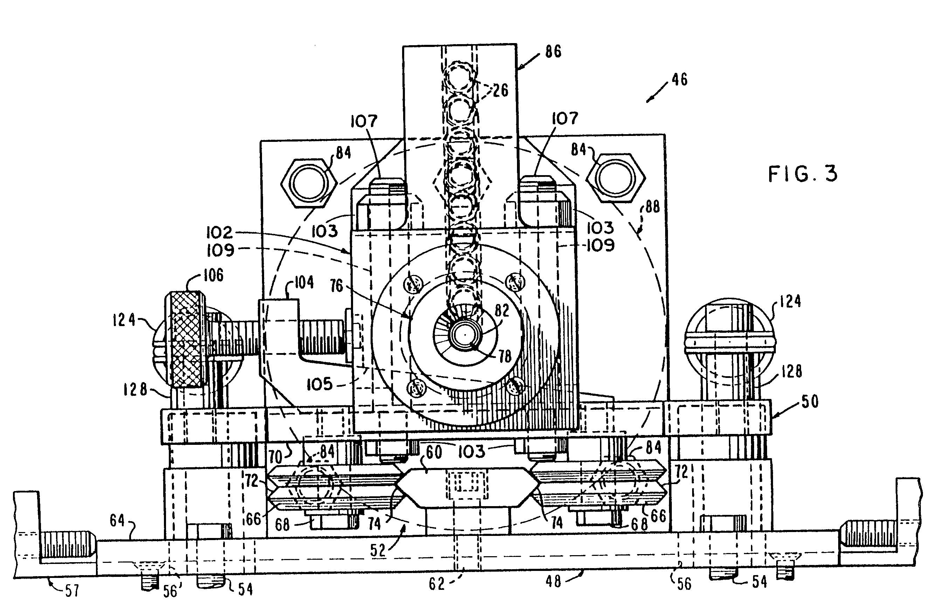

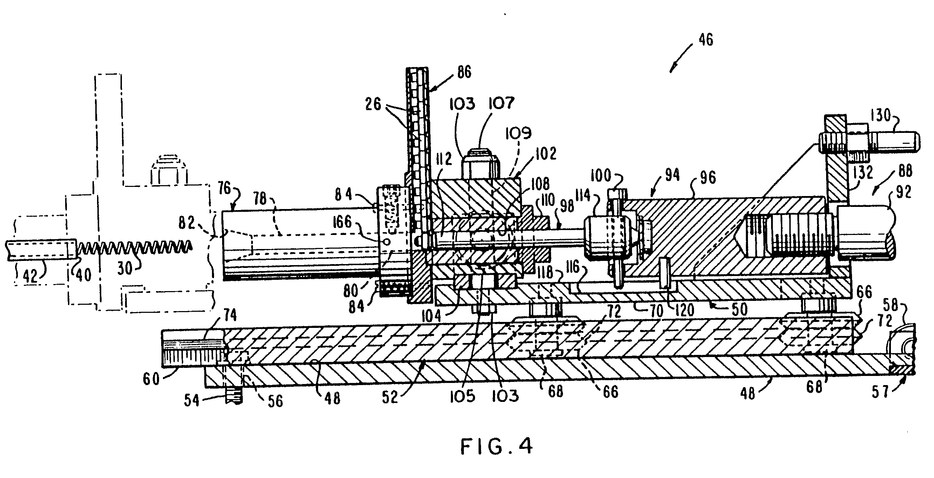

The track assembly 52 mounts the support carriage 50 on the base 48 for reciprocal movement longitudinally of the base along a generally rectilinear path of travel. More particularly, the track assembly 52 comprises an elongate guide track 60 which extends longitudinally of the base 48 on the upper surface 64 thereof and is secured thereto by means of screws 62 (only the forward one being seen in Fig. 3). The carriage 50 includes two pairs of guide roller assemblies each of which latter comprises a bolt 68 secured to the carriage and extending from the lower side 70 thereof, and a guide roller 66 rotatably mounted on the bolt 68. The pairs of guide roller assemblies are spaced apart longitudinally of the track 60, and the guide roller assemblies of each pair are spaced apart laterally, their rollers 66 peripherally engaging the track 60 from opposite sides. As seen from Figs. 3 and 4, the guide rollers 66 have a peripheral configuration complementary to that of the lateral sides of the guide track 60 so as to capture the guide track therebetween and adapt the rollers for longitudinal movement therealong. Specifically, each roller 66 has a peripheral groove 72 circumferentially formed thereon, and each lateral side of the guide track 60 is formed as ridge 74 which mates with the grooves 72 of the respective rollers 66.

The end plug applying apparatus 46 includes also guide means in the form of a plugger guide 76 supported on the carriage 50 for movement therewith.

The plugger guide 76 has an elongate central bore 78 with one end 80 for receiving an end plug 26 and with an opposite, outwardly flared end 82 for receiving the end 40 of a fuel rod tube 42 to be plugged. The bore 78 is adpated to guide the tube end 40, inserted through the flared end 82, toward the end plug 26 held at the end 80 of the bore for application of the end plug into the tube end. The plugger guide 76 is mounted by bolts 84 to the front of an end plug supply magazine 86 which, in turn, is mounted on the forward end of the support carriage 50. The supply magazine 86 is adapted to deliver end plugs 26, one at a time, by gravity feed into alignment with the end 80 of the plugger guide central bore 78.

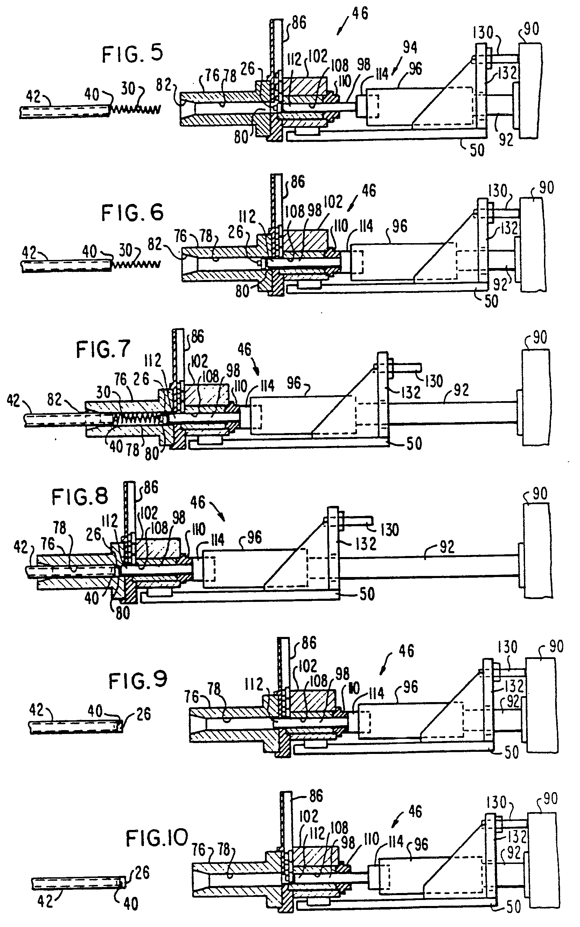

Additionally, the end plug applying apparatus 46 includes drive means, generally designated 88, coupled to the support carriage 50. The drive means 88 is operable to move the carriage 50 between two end positions distant from (Fig. 5) and adjacent to (Fig. 8), respectively, the end 40 of the stationarily positioned fuel rod tube 42 to which an end plug is to be applied, which distant and adjacent positions may also be referred to respectively as home and end plug applying positions of the carriage. The drive means 88 includes an actuator 90, preferably in the form of a pneumatic cylinder, stationarily mounted on the base 48 adjacent the rear end of the support carriage 50. The actuator 90 includes a drive member 92, preferably in the form of a piston rod, which is rectilinearly movable between a retracted position (Fig. 5) and an extended position (Fig. 8).

The drive means 88 includes further a drive force aligning and transmitting assembly 94 coupled to the drive member 92 of the actuator 90 and extending to the end plug supply magazine 86. Generally speaking, as the drive means 88 is actuated, it first moves the assembly 94 alone, causing it to transfer the lowermost end plug 26 from the magazine into the plug receiving end 80 of the bore 78 of the plugger guide 76, whereupon the carriage 50 together with the plugger guide 76 is moved along with the assembly 94 to enable the latter to apply the transferred end plug 26 to the end 40 of the fuel rod tube 42.

The drive force aligning and transmitting assembly 94 comprises a coupling element 96 which is threadably connected at one end thereof to the drive member 92, an elongate plunger element 98 pivotally connected to an opposite end of the coupling element 96 by means of a pin 100 extending generally perpendicular with respect to the carriage 50, a guideway 102 supporting the plunger element 98 for sliding movement therein in the direction of movement of the drive member 92, and a wedge bracket 104 for mounting and vertically positioning the guideway 102 and also the supply magazine 86 on the support carriage 50. The wedge bracket 104 has an adjustable knob 106 coupled with the guideway 102 so as, upon rotation of the knob, to vary the position of the guideway for the purpose of precisely aligning the plunger element 98 with the central bore 78 of the plugger guide 76. When guide/hold-down nuts 103 via guide/hold-down bolts 107 are loosened, rotation of the knob 106 causes the wedge bracket 104 to move laterally in relation to the guideway 102. Since an inclined recess 105 in the bottom of the guideway 102 is cut at the same angle as the upper wedge surface of the bracket 104, the lateral movement of the wedge bracket 104 causes the guideway 102 to move vertically, the latter being restrained from any lateral motion due to the close fit of the guide/hold-down bolts 107 in their respective vertical bores 109 provided in the guideway 102 (see Fig. 3).

The guideway 102 has an elongate passageway 108 in which the plunger element 98 is slidably supported in axial alignment with the central bore 78 of the plugger guide 76. An annular bushing 110 is mounted on the guideway 102 at the entrance to the passageway 108 and surrounds the plunger element 98. The plunger element 98 has a cylindrical main or leading portion 112 slidable in the passageway 108 of the guideway 102 and into the central bore 78 of the plugger guide 76 for transferring each end plug 26 into the bore 78, and a cylindrical trailing end portion sufficiently enlarged in diameter to enable it to engage the bushing 110 on the guideway 102. The leading main portion 112 and the trailing end portion 114 of the plunger element 98 are of such relative lengths with respect to each other as to ensure impingement of the trailing end portion 114 upon the bushing 110, and thereby transfer of the driving force of the drive member 92 to the support carriage 50 through the guideway 102, after the transfer of an end plug 26 into the plugger guide bore 78 as effected by the lead portion 112 of the plunger 98 is completed.

Below the coupling element 96, the support carriage 50 has a guide slot 116 formed in the upper side 118 thereof, which slot 116 extends parallel to the rectilinear path of movement of the drive member 92. The assembly 94 includes a guide pin 120 which extends from the underside of the coupling element 96 and into the guide slot 116 so as to restrict the coupling element 96 to rectilinear movement in the direction of travel of the drive member 92.

The end plug applying apparatus 46 further includes a return device 122 interconnecting the base 48 and the support carriage 50 in a manner such as to bias the support carriage toward its distant or retracted end position as shown in Figs. 2, 4, 5 and 10. The return device 122 comprises a pair of coil springs 124 connected under tension to and between respective pairs of upright posts 126, 128 (Fig. 2) protruding from the base 48 and from the support carriage 50, the springs 124 extending above and on opposite sides of the track assembly 52. The springs 124 are stretched when the support carriage 50 is moved toward the fuel rod tube end 40, i.e., in the plug applying direction, and they contract to restore the support carriage 50 to its retracted position remote from the tube end 40 upon corresponding movement of the drive member 92. The return springs 124 also aid in stabilizing the carriage 50 and the drive force aligning and transmitting assembly 94 in the transverse direction during movement thereof as effected by the actuator 90.

The return device 122 includes a stop pin 130 which is mounted on an upright brace 132 disposed on the rear of the support carriage 50 and behind the drive force aligning and transmitting assembly 94, and cooperates with the actuator 90 (see Figs. 2, 5, 6, 9 and 10) to stop the support carriage 50 upon reaching its end position remote from the fuel rod tube end 40.

Referring now to Figs. 5 to 10, upon operation of the actuator 90, and whilst the carriage 50 together with the guideway 102, the end plug magazine 86, and the plugger guide 76 is still retained in its fully retracted position (Fig. 5) by the springs 124, the drive member 92 of the actuator 90 moves the plunger 98 towards the fuel rod tube 42 to be plugged, thereby causing its leading end to engage the lowermost end plug 26 in the magazine 86 and to transfer it into the central bore 78 of the plugger guide 76 (see Fig. 6). Upon completion of this end plug transfer, and as the movement of the plunger 98 continues, its enlarged end portion 114 engages the bushing 110 on the guideway 102 and forces the latter together with the carriage, the magazine, and the plugger guide to move along with it, thereby causing the plugger guide 76 to be telescoped over the fuel rod tube 42 (Fig. 7) until the end plug 26 in the central bore 78 thereof reaches the tube end 40 and is rammed into it by the leading end of the plunger 98 (see Fig. 8). It is possible to reverse the sequence and have the drive member 92 move through almost its full stroke causing the end tube 40 to be inserted into the plugger guide 76 before the plunger element 98 is moved to transfer the end plug 26 into the bore 78 and then press fit it into the tube end 40.

Upon completion of the end plug applying operation described above, the direction of movement of the drive member 92 and, hence, of the plunger element 98 is reversed, and the drive member together with the plunger element moves from the fully extended position (Fig. 8) toward the fully retracted position thereof. The carriage 50 will follow the moving plunger element 98 under the action of the return springs 124 (Fig. 2) until the plugger guide 76 is completely withdrawn from the plugged end 40 of the fuel rod tube 42 and the pin 130 on the carriage 50 impinges upon the actuator 90 to terminate further movement of the carriage (see Fig. 9). This happens before the drive member 92 and the plunger element 98 have reached their fully retracted position, and as the drive member and plunger element proceed to move, the plunger element 98 which up to this moment had its leading portion 112 still engaged in the central bore 78 of the plunger guide 76 is completely withdrawn therefrom, thereby enabling the next end plug 26 at the bottom of the magazine 86 to gravitate into position ready for transfer. All movement of the drive member 92 and plunger element 98 is terminated when the coupling member 96 bottoms against the upright brace 132 of the carriage 50, as shown in Fig. 10.

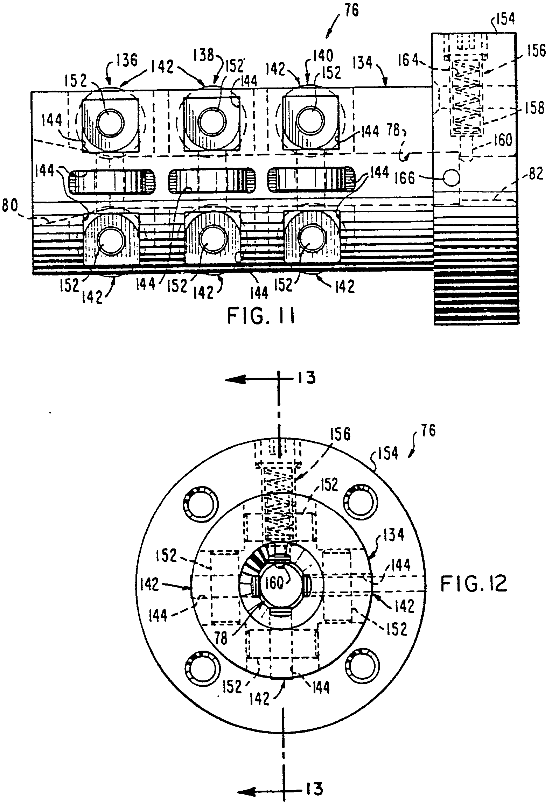

The plugger guide 76 preferably is of the improved design illustrated in Figs. 11 to 13. It comprises a guide housing 134 having the central bore 78 axially extending therethrough, and several sets 136, 138, 140 of rolling elements 142 diposed in the housing 134 at axially spaced positions along and about the axial bore 78. The rolling elements 142 in each set are positioned in separate recesses 144 formed in the housing 134 so as to extend radially from the central bore 78, and which are open both toward the bore 78 and toward the exterior of the housing. The rolling elements 142 are rotatably mounted in the respective recesses 144 in a fixed relation with respect to one another and in a manner such that their peripheries extend into the bore 78 far enough to establish rolling contact with the end 40 of the fuel rod tube 42 when it is inserted into the plugger guide bore 78 through its flared end 82. The rolling elements 142 are precisely positioned with respect to one another so as to accurately align the tube end 40 with the end plug 26 as the tube end 40 moves between the rolling elements 142 through the bore 78 and into engagement with the end plug 26.

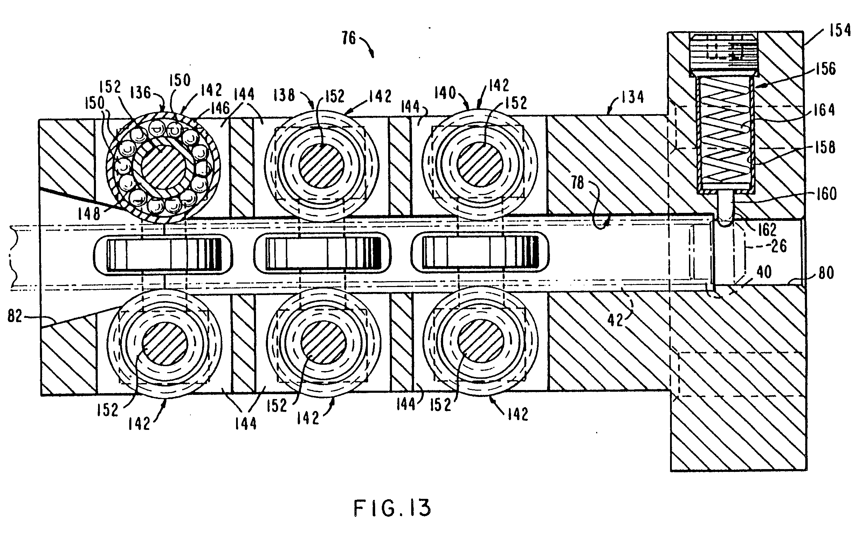

More particular, and as seen best in Fig. 13, each rolling element 142, preferably in the form of a stainless steel ball bearing, comprises an outer cylindrical race 146, an inner cylindrical race 148 disposed within the outer race 146 coaxially therewith, and metallic balls 150, preferably made of stainless steel, disposed between the outer and inner races 146, 148 for allowing rotation of the outer race relative to the inner race. Each rolling element 142 is mounted in the guide housing 134 on a pin 152 which extends across the associated recess 144 and is press fit between the surface portions of the housing 134 defining the recess, the pin 152 extending through the inner race 148 and preferably forming a slip fit therewith.

In each of the sets 136, 138, 140 of rolling elements there are four rolling elements 142 circumferentially spaced about the guide housing bore 78 in the recesses 144 which preferably are approximately ninety degrees apart. Preferably, there are three sets of rolling elements axially spaced along the bore 78.

The plugger guide 76 has an enlarged end portion 154 around the end plug receiving end 80 of the axial bore 78, in which enlarged end portion 156 there is disposed a yieldable end plug retaining means generally designated 156 and adapted to assist in holding each end plug 26 transferred into the end 80 of the central bore 87 stationarily in position for being applied to the end 40 of the fuel rod tube 42. The retaining means 156 comprises a bore 158 extending radially with respect to the plug receiving end 80 of the central bore 78. A retainer pin 160 seated in the radial bore 158 extends through a smaller diameter opening 162 into the central bore end 80 for engagement with the periphery of the end plug 26 transferred thereto. The retainer pin 160 is biased toward the central bore by means of a pressure spring 164 disposed in the radial bore 158 between the pin 160 and a threaded plug closing the outer end of the radial bore. In addition to the retaining means 156 holding the end plug 26, the plug receiving end 80 of the axial bore 78 has a diameter such as to provide a good frictional fit with the end plug 26 which also serves to hold the end plug. As seen from Fig. 11, the enlarged guide housing end portion 154 has an observation hole 166 permitting a determination to be made as to whether an end plug 26 is present at the axial bore end 80.

**Claims**

1. Apparatus (46) for applying an end plug (26) to an end of a nuclear fuel rod tube, comprising:
a plugger guide (76) having therethrough a longitudinal bore (78) with one end (80) for receiving the end plug (26), with an opposite end (82) for receiving the end of the fuel rod tube (42) to which the end plug is to be applied, and with a cross-sectional dimension enabling an end portion (40) of the fuel rod tube, including said end (40) thereof, to be received in said bore (78) and enabling the plugger guide and said tube end portion to the telescopically moved over and into, respectively, one another for applying the end plug (26) received in said one end (80) of the bore (76) to the tube end (40) received through the opposite end (82) of the bore, means (142) associated with said plugger guide (76) for maintaining said tube end accurately aligned with the end plug during relative movement therebetween,
a carriage (50) having said plugger guide (76) mounted thereon and supported for reciprocal movement thereof between a home position and an end plug applying position,
and drive means (88) for moving said support carriage (50).

2. Apparatus according to claim 1, characterized in that said plugger guide (76) comprises an elongate housing (134) having said longitudinal bore (78) extending therethrough, and said means (142) for maintaining the tube end aligned with the end plug comprise several sets (136, 138, 140) of rolling elements (142) supported in said housing, said sets of rolling elements being spaced apart along said bore, and the rolling elements in each set being positioned in fixed relationship with respect to each other about the bore such as to receive and radially support said tube end portion therebetween.

3. Apparatus according to claim 2, characterized in that each set (136, 138, 140) of rolling elements (142) contains four rolling elements (142) spaced substantially 90 degrees apart circumferentially about said longitudinal bore (78).

4. Apparatus according to claim 2 or 3, characterized in that there are at least three of said sets (136, 138, 140) of rolling elements (142).

5. Apparatus according to claim 2, 3 or 4, characterized in that each of said rolling elements (142) is an anti-friction bearing.

6. Apparatus according to claim 5, characterized in that said anti-friction bearing (142) is mounted on a pin (152) press-fit into the housing (134).

7. Apparatus according to claim 6, characterized in that each anti-friction bearing (142) includes an outer race (146) and an inner race (148), said pin (152) extending through said inner race (148) and forming a slip-fit therewith.

8. Apparatus according to any one of claims 2 to 7, characterized in that said elongate housing (134) includes plug retaining means (156) for holding the end plug (26), when received in said one end (80) of the longitudinal bore (76), in position for application thereof to said tube end (40).

9. Apparatus according to claim 8, characterized in that said plug retaining means (156) comprises a radial bore (158) formed in a wall portion of the elongate housing (134), and a spring-loaded pin member (160) seated in said radial bore (158) and biased toward frictional engagement with the periphery of the end plug (26) received in said one end (80) of the longitudinal bore (78).

10. Apparatus according to any of claims 1 to 9, characterized by a force aligning and transmitting assembly (94) comprising a guideway (102) mounted on the carriage (50) for movement together therewith and disposed adjacent the plugger guide (76) near the end-plug receiving end (80) of its longitudinal bore (78), and a plunger (98) supported in said guideway (102) in axial alignment with said end-plug receiving end (80) and for axial movement of the plunger (98) to and fro; and by drive means (88) for actuating the plunger (98) toward said longitudinal bore (78) to insert the end plug (26) into the end-plug receiving end (80) of the longitudinal bore.

11. Apparatus according to claim 10, characterized in that said guideway (102) is adjustable relative to the plugger guide (76) so as to permit accurate axial alignment of said plunger (98) with the end-plug receiving end (80) of the longitudinal bore (78).

12. Apparatus according to claim 10 or 11, characterized in that said drive means (88) is coupled directly to one, and through said one is coupled to the other, of said plunger (98) and said carriage (50) in a manner such as first to actuate said one and then, through said one, actuate the other of the plunger and carriage.

13. Apparatus according to claim 12, characterized in that said drive means (88) is coupled to the plunger (98), and said plunger has an enlarged portion (114) adapted, during actuation of the plunger and arrival thereof at the plug-receiving end of said bore (78), to engage a part (110) of said guideway (102) on the carriage (50) and to drive the latter to its end-plug applying position thereof as the plunger continues to be actuated toward an end position thereof.

14. Apparatus according to claim 12, characterized in that said other of the plunger (98) and carriage (50) has associated therewith spring means (124) for returning it, after actuation, to the home position thereof.

15. Apparatus according to claim 13, characterized in that said carriage (50) is supported on a stationary track assembly (52) for recetilinear movement therealong.

16. Apparatus according to claim 15, characterized in that said carriage (50) has associated therewith return means (122) for restoring the carriage from the end plug applying position to the home position thereof, and stop means (130) for terminating the return movement of the carriage upon arrival thereof in its home position while allowing said drive means (88) to complete returning said plunger (98) to the home position thereof.

17. Apparatus according to claim 16, characterized in that said return means comprises a pair of tension springs (124) connected to the carriage (50) so as to be stretched upon movement of the carriage to its end plug applying position, said tension springs extending on opposite sides of the track assembly (52).

18. Apparatus according to claim 15, 16 or 17, characterized in that said track assembly (52) comprises an elongate track (60), and at least two pairs of guide rollers (66) rotatably mounted on the lower side of the carriage (50), said pairs of guide rollers being spaced apart along said track (60) and the guide rollers (66) of each pair peripherally engaging the track from opposite sides thereof.

19. Apparatus according to claim 18, characterized in that each of said guide rollers (66) has a peripheral surface complementary to, and mating with, a guide surface on the adjacent side of said track (60).

20. Apparatus according to claim 19, characterized in that each roller (66) has a circumferential groove (72) formed in the periphery thereof, and said guide surface has the form of a ridge (74) mating with the groove (72).

21. Apparatus according to any one of claims 1 to 20, characterized by end plug feed means (86) mounted on said carriage (50) adjacent the plugger guide (76) and adapted to deliver one end plug (26) at a time into alignment with the end plug receiving end (80) of said longitudinal bore (78).

22. Apparatus according to any one of the preceding claims, characterized in that said one end (80) of the longitudinal bore (78) has a diameter such as to form a friction fit with the end plug (26) when received therein.

## Patentansprüche

1. Apparat (46) zum Aufsetzen einer Endkappe (26) auf ein Ende eines Kernreaktorbrennstabes, der aufweist:

eine Kappenführung (76) mit einer in Längsrichtung verlaufenden Bohrung (78), deren eines Ende (80) die Endkappe (26) aufnimmt, und deren anderes Ende (82) das Ende des Brennstabrohrs (42) aufnimmt, an welchem die Endkappe anzubringen ist, und die eine solche Querschnittsbemessung aufweist, daß ein Brennstabrohr-Endteil (40) mit dem genannten Brennstabrohrende (40) in der Bohrung (48) aufgenommen werden kann und daß die Kappenführung und der Brennstabrohr-Endteil teleskopartig in- und auseinanderschiebbar sind, um die im einen Ende (80) der Bohrung (76) aufgenommene Endkappe (26) auf das Brennstabrohrende (40) aufzusetzen, das durch das andere Ende (82) der Bohrung aufgenommen wird, und mit einer der Kappenführung (76) zugeordneten Vorrichtung (142) zur Aufrechterhaltung der genauen Ausrichtung des Rohrendes mit der Endkappe während der gegenseitigen Relativbewegung,

einen Schlitten (50), an dem die Kappenführung (76) befestigt ist, und der wechselseitig zwischen einer Ruhelage und einer Lage, in der die Endkappe aufgesetzt wird, hin- und herbewegbar ist,

und einen Antrieb (88) zur Bewegung des Schlittens (50).

2. Apparat nach Anspruch 1, dadurch gekennzeichnet, daß die Kappenführung (76) ein längliches Gehäuse (134) mit der in Achsrichtung durch sie hindurchführenden Bohrung (78) aufweist, und die Vorrichtung (142) zur Aufrechterhaltung der Ausrichtung des Rohrendes mit der Endkappe mehrere Gruppen (136, 138, 140) von in dem Gehäuse gelagerten Wälzelementen (142) aufweist, wobei die Gruppen mit gegenseitigen Abständen entlang der Bohrung angeordnet sind und wobei die Wälzelemente jeder Gruppe mit festen Abständen zwischeneinander um die Bohrung herum angeordnet sind, um den Endteil des Brennstabrohrs aufzunehmen und zwischen ihnen radial zu lagern.

3. Apparat nach Anspruch 2, dadurch gekennzeichnet, daß jede Gruppe (136, 138, 140) von Wählzelementen (142) vier Elemente (142) umfaßt, die jeweils um 90° versetzt am Umfang der in Längsrichtung verlaufenden Bohrung (78) angeordnet sind.

4. Apparat nach einem der Ansprüche 2 oder 3, dadurch gekennzeichnet, daß mindestens drei Gruppen (136, 138, 140) von Wälzelementen (142) vorgesehen sind.

5. Apparat nach einem der Ansprüche 2, 3 oder 4, dadurch gekennzeichnet, daß die Wälzelemente (142) Wälzlager bilden.

6. Apparat nach Anspruch 5, dadurch gekennzeichnet, daß das Wälzlager (142) auf einem mittels Preßsitz im Gehäuse (134) befestigten Bolzen (152) angeordnet ist.

7. Apparat nach Anspruch 6, dadurch gekennzeichnet, daß jedes Wälzlager (142) einen Außenring (146) und einen Innenring (148) aufweist, wobei der Bolzen (152) durch den Innenring (148) führt und mit diesem einen Gleitsitz bildet.

8. Apparat nach einem der Ansrpüche 2 bis 7, dadurch gekennzeichnet, daß das längliche Gehäuse (134) einen Haltemechanismus (156) aufweist, der die Endkappe (26) in einer entsprechenden Lage festhält, in der sie, wenn sie im Ende (80) der Längsbohrung (76) aufgenommen ist, auf das Rohrende (40) aufgesetzt wird.

9. Apparat nach Anspruch 8, dadurch gekennzeichnet, daß der Haltemechanismus (156) eine radiale Bohrung (158) in der Wandung des länglichen Gehäuses (134) und einen mit einer Feder beaufschlagten Stift (160) aufweist, der in der radialen Bohrung (158) sitzt und durch die Federkraft eine reibschlüssige Verbindung mit der Außenfläche der Endkappe (26) bildet.

10. Apparat nach einem der Ansprüche 1 bis 9, dadurch gekennzeichnet, daß eine Kraft eine Montageeinheit (94) bewegt und ausrichtet, wobei die Montageeinheit eine am Schlitten (50) befestigte Führungsbahn (102) zum gemeinsamen Verschieben aufweist, die an der Kappenführung (76) anliegend in der Nähe des die Endkappe aufnehmenden Endes (80) der Längsbohrung (78) angeordnet ist, und einen axial mit dem die Endkappe aufnehmenden Ende (80) fluchtenden, an der Führungsbahn (102) geführten Kolben (98) zum axialen Hin- und Herverschieben aufweist; und daß ein Antrieb (88) den Kolben (98) in Richtung der Längsbohrung (78) bewegt, um die Endkappe (26) in das entsprechende Ende (80) der Längsbohrung einzufügen.

11. Apparat nach Anspruch 10, dadurch gekennzeichnet, daß die Führungsbahn (102) gegenüber der Kappenführung (76) einstellbar ist, wobei exaktes axiales Ausrichten des Kolbens (98) mit dem die Endkappe aufnehmenden Ende (80) der Längsbohrung (78) möglich ist.

12. Apparat nach einem der Ansprüche 10 oder 11, dadurch gekennzeichnet, daß der Antrieb (88) direkt auf entweder Kolben (98) oder Schlitten (50) und über Kolben bzw. Schlitten auf das jeweils andere Bauteil einwirkt, so daß zunächst das eine Bauteil und dadurch dann das andere Bauteil bewegt wird.

13. Apparat nach Anspruch 12, dadurch gekennzeichnet, daß der Antrieb (88) mit dem Kolben (98) verbunden ist, wobei der Kolben einen angepaßten erweiterten Bereich (114) aufweist, der während der Bewegung des Kolbens bis zum die Endkappe aufnehmenden Ende der Bohrung (78) auf ein Teil (110) der Führungsbahn (102) am Schlitten (50) aufstößt und die Führungsbahn bis in die Lage schiebt, in der die Endkappe aufgesetzt wird, da sich der Kolben weiter in Richtung seiner Endstellung bewegt.

14. Apparat nach Anspruch 12, dadurch gekennzeichnet, daß das nicht mit dem Antrieb (88) direkt verbundene Bauteil ein ihm zugeordnetes Federsystem (124) aufweist, das es nach der Arbeitsbewegung in die Aufangsstellung zurückholt.

15. Apparat nach Anspruch 13, dadurch gekennzeichnet, daß der Schlitten (50) durch ortsfeste Gleitführungen (52) zur geradlinigen Bewegung entlang dieser geführt wird.

16. Apparat nach Anspruch 15, dadurch gekennzeichnet, daß der Schlitten (50) einen Rückholmechanismus (122) zu seiner Rückholung aus der Lage, in der die Endkappe aufgesetzt wird, in die Ausgangslage und einen Anhaltemechanismus (130) aufweist, der die Rückholbewegung des Schlittens, wenn dieser an seiner Ausgangsstellung angekommen ist, beendigt, wobei dadurch die Fortsetzung der Rückholung des Kolbens (98) in seine Ausgangsstellung durch den Antrieb (88) ermöglicht wird.

17. Apparat nach Anspruch 16, dadurch gekennzeichnet, daß der Rückholmechanismus zwei mit dem Schlitten (50) verbundene Zugfedern (124) aufweist, wobei diese an der gegenüberliegenden Seite der Gleitführungen (52) angeordnet sind, und bei der Bewegung des Schlittens in Richtung der Lage, in der die Endkappe aufgesetzt wird, gedehnt werden.

18. Apparat nach einem der Ansprüche 15, 16 oder 17, dadurch gekennzeichnet, daß die Gleitführung (52) eine längliche Führung (60) und mindestens zwei Führungsrollenpaare (66) aufweist, die im Inneren des Schlittens (50) drehbar befestigt sind, wobei die Führungsrollenpaare entlang der Führungsbahn (60) angeordnet sind, und die einzelnen Führungsrollen (66) der Paare von der jeweils in Umfangsrichtung gegenüberliegenden Seite der Führungsbahn auf diese eingreifen.

19. Apparat nach Anspruch 18, dadurch gekennzeichnet, daß die Führungsrollen (66) an ihrem Umfang eine Oberfläche aufweisen, die komplementär zu der Oberfläche der anliegenden Führungsbahn (60) ist, und mit dieser zusammenpaßt.

20. Apparat nach Anspruch 19, dadurch gekennzeichnet, daß jede Führungsrolle (66), an ihrem Umfang eine Verzahnung (72) aufweist, die mit einer Verzahnung (74) kämmt, die durch die Oberfläche der Führungsbahn gebildet ist.

21. Apparat nach einem der Ansprüche 1 bis 20, dadurch gekennzeichnet, daß eine die Endkappen zuführende Zuführungseinrichtung (86) an der Kappenführung (76) anliegend am Schlitten (50) befestigt ist, die zu einer bestimmten Zeit eine Endkappe (26) freigibt, die mit dem die Endkappe aufnehmenden Ende (80) der Längsbohrung (78) axial ausgerichtet zu liegen kommt.

22. Apparat nach einem der vorhergehenden Ansprüche, dadurch gekennzeichnet, daß das genannte eine Ende (80) der Längsbohrung (78) einen Durchmesser aufweist, mit dem die in der Bohrung aufgenommene Endkappe (26) eine Reibpassung bildet.

**Revendications**

1. Appareil (46) pour appliquer un bouchon à l'extrémité d'un crayon combustible nucléaire, comprenant:

un guide (76) de bouchage traversé par un alésage longitudinal (78) présentant une extrémité (80) pour recevoir le bouchon (26) d'extrémité, une extrémité opposée (82) pour recevoir l'extrémité du crayon combustible (42) à laquelle le bouchon d'extrémité doit être appliqué, et une dimension transversale permettant de recevoir dans l'alésage (78) une partie (40) d'extrémité du crayon combustible, y compris cette extrémité (40), et permettant de faire coulisser le guide de bouchage et cette partie d'extrémité du crayon respectivement l'un sur l'autre et l'un dans l'autre afin d'appliquer le bouchon (26) d'extrémité, reçu à cette extrémité (80) de l'alésage (78), à l'extrémité (40) du crayon reçue par l'extrémité opposée (82) de l'alésage, des moyens (142) étant associés à ce guide (76) de bouchage pour maintenir cette extrémité du crayon en alignement précis avec le bouchon d'extrémité pendant le déplacement relatif entre eux,

un chariot (50) sur lequel ce guide (76) de bouchage est monté et supporté en vue de son déplacement alternatif entre une position de repos et une position d'application de bouchon d'extrémité,

et un moyen (88) d'entraînement pour déplacer ce chariot (50) de support.

2. Appareil suivant la revendication 1, caractérisé en ce que le guide (76) de bouchage comprend un carter allongé (134) à travers lequel se prolonge l'alésage longitudinal (78), et en ce que les moyens (142) pour maintenir l'extrémité du crayon en alignement avec le bouchon d'extrémité comprennent plusieurs groupes (136, 138, 140) d'éléments roulants (142) supportés dans ce carter, ces groupes d'éléments roulants étant espacés les uns des autres le long de l'alésage, et les éléments roulants de chaque groupe étant montés à des points fixes les uns par rapport aux autres autour de l'alésage de manière à recevoir et à supporter radialement entre eux la partie d'extrémité du crayon.

3. Appareil suivant la revendication 2, caractérisé en ce que chaque groupe (136, 138, 140) d'éléments roulants (142) comprend quatre éléments roulants (142) circumférentiellement espacés sensiblement de 90 degrés autour de l'alésage longitudinal (78).

4. Appareil suivant la revendication 2 ou 3, caractérisé en ce qu'il y a au moins trois de ces groupes (136, 138, 140) d'éléments roulants (142).

5. Appareil suivant l'une des revendications 2, 3 ou 4, caractérisé en ce que chacun de ces éléments roulants (142) est un roulement antifriction.

6. Appareil suivant la revendication 5, caractérisé en ce que ce roulement antifriction (142) est monté sur un axe (152) calé à la presse dans le carter (134).

7. Appareil suivant la revendication 6, caractérisé en ce que chaque roulement antifriction (142) comprend une bague extérieure (146) et une bague intérieure (148), l'axe (152) passant dans la bague intérieure (148) et formant un ajustement à frottement doux avec celle-ci.

8. Appareil suivant l'une quelconque des revendications 2 à 7, caractérisé en ce que le carter allongé (134) comprend un moyen (156) pour maintenir le bouchon (26) d'extrémité, lorsqu'il est reçu à l'extrémité (80) de l'alésage longitudinal (76), dans une position en vue de son application à l'extrémité (40) du crayon.

9. Appareil suivant la revendication 8, caractérisé en ce que ce moyen (156) pour maintenir le bouchon comprend un trou radial (158) formé dans une partie de la paroi du carter allongé (134), et un élément (160) formant goupille poussé par un ressort, cet élément formant goupille étant logé dans le trou radial (158) et poussé en contact de frottement avec la périphérie du bouchon (26) d'extrémité reçu dans l'extrémité (80) de l'alésage longitudinal (78).

10. Appareil suivant l'une quelconque des revendications 1 à 9, caractérisé par un ensemble (94) de transmission et d'alignement de la force d'entraînement comprenant une coulisse (102) montée sur le charoit (50) pour se déplacer avec celui-ci et disposée de manière contiguë au guide (76) de bouchage près de l'extrémité (80) de son alésage longitudinal (78) recevant le bouchon d'extrémité, et un piston (98) supporté dans la coulisse (102) dans l'alignement axial de l'extrémité (80) recevant le bouchon d'extrémité et en vue du mouvement axial alternatif du piston (98); et par un moyen (88) d'entraînement pour commander le piston (98) et le déplacer vers l'alésage longitudinal (78) afin d'introduire le bouchon (26) d'extrémité dans l'extrémité (80) recevant le bouchon d'extrémité de l'alésage longitudinal.

11. Appareil suivant la revendication 10, caractérisé en ce que cette coulisse (102) est réglable par rapport au guide (76) de bouchage afin de permettre l'alignement axial précis du piston (98) et de l'extrémité (80) recevant le bouchon d'extrémité de l'alésage longitudinal (78).

12. Appareil suivant la revendication 10 ou 11, caractérisé en ce que le moyen (88) d'entraînement est accouplé directement au premier, et par celui-ci est accouplé au deuxième des deux organes formés du piston (98) et du chariot (50) de manière à d'abord actionner le premier et ensuite, par celui-ci, actionner le deuxième des deux organes formés du piston et du chariot.

13. Appareil suivant la revendication 12, caractérisé en ce que le moyen (88) d'entraînement est accouplé au piston (98), et ce piston présenté une partie (114) de grand diamètre prévue pour, pendant l'actionnement du piston et son arrivée à l'extrémité recevant le bouchon de l'alésage (78), engager une partie (110) de la glissière (102) sur le chariot (50) et entraîner ce dernier vers sa position d'application du bouchon d'extrémité pendant que le piston continue à être actionné vers sa position d'extrémité.

14. Appareil suivant la revendication 12, caractérisé en ce qu'au deuxième des deux organes formés du piston (98) et du chariot (50) sont associés des moyens (124) de rappel pour le ramener, après actionnement, à sa position de repos.

15. Appareil suivant la revendication 13, caractérisé en ce que le chariot (50) est supporté par un ensemble fixe (52) formant chemin de roulement en veu d'un mouvement rectiligne le long de celui-ci.

16. Appareil suivant la revendication 15, caractérisé en ce qu'au chariot (50) est associé un moyen (122) de rappel pour ramener le chariot de sa position d'application d'un bouchon d'extrémité à sa position de repos, et un moyen d'arrêt (130) pour mettre fin au mouvement de rappel du chariot lorsqu'il arrive dans sa position de repos tout en permettant au moyen (88) d'entraînement de terminer le retour complet du piston (98) dans sa position de repos.

17. Appareil suivant la revendication 16, caractérisé en ce que ce moyen de rappel comprend une paire de ressorts (124) de traction reliés au chariot (50) de manière à sa tendre lorsque le chariot se déplace vers sa position d'application d'un bouchon d'extrémité, ces ressorts de traction étant placés de chaque côté de l'ensemble (52) formant chemin de roulement.

18. Appareil suivant la revendication 15, 16 ou 17, caractérisé en ce que ensemble (52) formant chemin de roulement comprend une barre allongée (60) et au moins deux paires de galets (66) de guidage montés fous sur la face inférieure du chariot (50), ces paires de galets de guidage étant espacées le long de la barre (60) et les galets (66) de guidage de chaque paire étant en contact à leur péiphérie avec la barre sur ses côtés opposés.

19. Appareil suivant la revendication 18, caractérisé en ce que chacun de ces galets (66) de guidage présente une surface périphérique qui complète et correspond à la surface de guidage du côté contigu de la barre (60).

20. Appareil suivant la revendication 19, caractérisé en ce que chaque galet (66) comporte une gorge circumférentielle (72) formée à sa périphérie, et la surface de guidage à la forme d'une arête (74) qui correspond à la gorge (72).

21. Appareil suivant l'une quelconque des revendications 1 à 10, caractérisé par un moyen (86) d'alimentation en bouchons d'extrémité, monté sur le chariot (50) au voisinage du guide (76) de bouchage et prévu pour amener un bouchon (26) d'extrémité à la fois dans l'alignement de l'extrémité (80) recevant le bouchon d'extrémité de l'alésage longitudinal (78).

22. Appareil suivant l'une quelconque des revendications précédentes, caractérisé en ce que cette extrémité (80) de l'alésage longitudinal (78) à un diamètre tel qu'elle forme un ajustement à frottement avec le bouchon (26) d'extrémité lorsque celui-ci est reçu dans l'alésage.

FIG. I

FIG. 2

FIG. 3

FIG. 4

FIG. 5

FIG. 6

FIG.7

FIG.8

FIG.9

FIG.10

FIG. 11

FIG. 12

FIG.13